# EUROPÄISCHE PATENTANMELDUNG

(11) **EP 3 214 125 A1**
(43) Veröffentlichungstag der Anmeldung: **06.09.2017**
(21) Anmeldenummer: 17000181.2
(22) Anmeldetag: 06.02.2017
(51) Int. Cl.: C08L 23/08

(54) **ZUSAMMENSETZUNGEN ENTHALTEND CYCLOOLEFINCOPOLYMER-ELASTOMERE, DARAUS HERGESTELLTE FORMKÖRPER UND DEREN VERWENDUNG**

(30) Priorität: 05.03.2016 DE 202016001500 U
(71) Anmelder: TOPAS Advanced Polymers GmbH, 65929 Frankfurt am Main (DE)
(72) Erfinder: Hatke, Wilfried, 65779 Kelkheim (DE); Grimm, Michael, 55262 Heidesheim (DE)
(74) Vertreter: Ackermann, Joachim

(57) **Zusammenfassung**

Beschrieben werden Zusammensetzungen enthaltend
a) 99 bis 45 Gew. % eines teilkristallinen Cycloolefin-Copolymeren mit einer Glasübergangstemperatur von kleiner als 30°C, das hergestellt wurde durch ringerhaltende Copolymerisation von ein oder mehreren polycyclischen Olefinmonomeren mit Ethylen und gegebenenfalls weiteren damit copolymerisierbaren ethylenisch-ungesättigten Comonomeren, und
b) 1 bis 55 Gew. % einer Komponente b1) und/oder b2), wobei Komponente b1) ein amorphes Cycloolefinpolymer mit einer Glasübergangstemperatur im Bereich von 30 bis 200°C ist, das hergestellt wurde durch ringerhaltende Copolymerisation von ein oder mehreren polycyclischen Olefinmonomeren mit Ethylen und gegebenenfalls weiteren damit copolymerisierbaren ethylenisch-ungesättigten Comonomeren oder durch ringöffnende Polymerisation von ein oder mehreren monocyclischen oder polycyclischen Monomeren und gegebenenfalls weiteren damit copolymerisierbaren Monomeren und gegebenenfalls einer sich daran anschließenden Hydrierung, und
Komponente b2) ein Polymer ist, das ausgewählt wird aus der Gruppe der teilkristallinen Ethylen-Homopolymeren, der teilkristallinen Ethylen-C₃-C₈-alpha-Olefin-Copolymeren, der teilkristallinen Propylen-Homopolymeren, der Propylen-C₄-C₈-alpha-Olefin-Copolymeren oder von Kombinationen von zwei oder mehreren dieser Polymeren,
wobei die Gewichtsangaben auf die Gesamtmenge von Komponenten a) und b) bezogen sind.

Die Zusammensetzungen lassen sich zur Herstellung von Formkörper zum Einsatz in Medizin, Medizintechnik, Lebensmitteltechnik, Elektronik, Elektrotechnik, Behälter- und Apparatebau, Fahrzeugbau oder als Verpackungsmaterialien verwenden.

## Beschreibung

Die vorliegende Erfindung betrifft Gemische aus elastomeren Cycloolefincopolymeren und aus ausgewählten Polymeren. Diese Gemische weisen ausgezeichnete mechanische Eigenschaften auf, wie sehr gute E-Moduli, Bruchdehnungen, Charpy-Schlagzähigkeiten (gekerbt und nicht gekerbt), sowie ausgezeichnete Barriere-Eigenschaften, elektrische Eigenschaften, chemische Eigenschaften, wie Löslichkeit, chemische Beständigkeit und ein gegenüber elastomeren Cycloolefincopolymeren verringertes Adsorptionsvermögen.

Diese Gemische lassen sich auf vielen Gebieten einsetzen. Beispielsweise in der Medizin und Medizintechnik, der Lebensmitteltechnik, der Elektronik und Elektrotechnik, dem Behälter- und Apparatebau, dem Fahrzeugbau sowie als Verpackungsmaterialien.

Cycloolefincopolymere (nachstehend "COC" genannt) sind seit Jahren bekannt.

Typische Vertreter dieser Copolymeren leiten sich von Norbornen und Ethylen ab. Die meisten dieser Copolymeren sind amorph, zeichnen sich durch eine ausgezeichnete Transparenz aus und werden zur Herstellung von Folien, optischen Bauteilen sowie Behältern aller Art eingesetzt.

Amorphe COC haben häufig Glasübergangstemperaturen von mehr als 30°C und weisen keine kristallinen Bereiche auf. Dieses kann beispielsweise mit Hilfe der dynamischen Differenzkalorimetrie (= differential scanning calorimetry oder DSC) festgestellt werden, indem in den DSC-Diagrammen keine Phasenübergänge von fest zu flüssig (Schmelzübergänge) zu erkennen sind. Formkörper aus diesen Copolymeren zeichnen sich durch hohe E-Moduli und Zugfestigkeiten aus, durch niedrige Reißdehnungen und geringe Opazitäten bzw. hohe Transparenz.

Eine weitere Gruppe von COC zählt zu den thermoplastischen Elastomeren.

Typische Vertreter dieser Copolymeren leiten sich auch hier von Norbornen und Ethylen ab, weisen aber im Vergleich zu den amorphen COC niedrigere Gehalte an von Norbornen (oder von anderen polyzyklischen Olefinen) abgeleitete Struktureinheiten bzw. höhere Gehalte an von Ethylen abgeleiteten Struktureinheiten auf. Elastomere COC werden unter ringerhaltender Polymerisation hergestellt. Diese Copolymere sind teilkristallin und Formkörper aus diesen Copolymeren können transparent oder trüb aussehen. Elastomere COC können zur Herstellung von Folien und Behältern aller Art eingesetzt werden.

Elastomere COC haben in der Regel Glasübergangstemperaturen von kleiner als 30°C und weisen kristalline Bereiche auf. Dieses kann beispielsweise mit Hilfe der DSC festgestellt werden, indem in den DSC-Diagrammen Phasenübergänge von fest zu flüssig (Schmelzübergänge) zu erkennen sind. Formkörper aus diesen Copolymeren zeichnen sich im Vergleich mit Formkörpern aus amorphen COC durch niedrigere E-Moduli und vergleichbare oder geringere Zugfestigkeiten aus, durch sehr große Reißdehnungen und durch vergleichbare oder höhere Opazitäten.

Es ist auch bereits vorgeschlagen worden, amorphe COC mit anderen Polyolefinen zu kombinieren, beispielsweise mit Polyethylenen oder mit Polypropylenen.

Allgemein bekannt ist, dass wichtige Eigenschaften von Polymeren verändert werden können, indem man Polymere mit anderen Polymeren legiert.

Aus der Patentliteratur sind zahlreiche Beispiele bekannt, in denen Polyolefine, wie Polyethylen oder Polyethylen, mit Zusätzen von amorphem COC gemischt werden, um bestimmte Eigenschaften der Polyolefine zu modifizieren.

So werden in den Patentschriften DD 214 137 und DD 214 623 thermoplastische Konstruktionswerkstoffe auf Basis von Polyolefinen beschrieben, die gleichzeitig gute Wärmeformbeständigkeit, Chemikalienbeständigkeit, Steifheit, Zähigkeit und sehr gute dielektrische Eigenschaften besitzen. Die beschriebenen Zusammensetzungen enthalten als wesentliche Bestandteile harte und spröde Norbornen-Ethylen-Copolymere und Polyethylen oder verzweigte Polyolefine. Zur Verbesserung der Schlagzähigkeit und Kerbschlagzähigkeit werden Elastomere, wie z.B. elastomere Ethylen-Co- und -Terpolymere bzw. Pfropfcopolymere zugesetzt. Die Zusätze von Polyethylen oder verzweigten Polyolefinen zu den Norbornen-Ethylen-Copolymeren bewirken eine Verbesserung der Chemikalienbeständigkeit und der Zähigkeit des Norbornen-Ethylen-Copolymeren.

Weiterhin bekannt ist, dass Polyolefin-Thermoplast-Kombinationen aus 40 - 98 Gew. % teilkristallinem Polyolefin und 2 - 60 Gew.-% statistischem amorphen COC (T_{g} von etwa 70 °C) gute Wärmeformbeständigkeit und Rissbeständigkeit sowie geringen Schrumpf aufweisen (vergl. JP 01/318052 A). Kombinationen aus von cyclischen Olefinen und Ethylen abgeleiteten Copolymeren und teilkristallinen Polyolefinen zeigen laut Offenlegungsschrift JP 03/122148 A verbesserte Verarbeitbarkeit der Schmelze.

Eine Thermoplastkombination aus 5 bis 90 Gew.-% linearem Polyolefin, welche aus 8 bis 40 % ultrahochmolekularem Polyolefin ausgewählter Viskosität und 60 bis 92 % gering bis hochmolekularem Polyolefin ausgewählter Viskosität und 95 bis 10 Gew. % mindestens eines von Cycloolefinen abgeleiteten Thermoplasten mit einer Erweichungstemperatur von mindestens 70 °C besteht, wird in US 4 990 559 A beschrieben.

Polymerlegierungen aus Cycloolefinpolymeren und Polyolefinen werden in EP 0 566 988 A1 beschrieben. Das Legieren von Cycloolefinpolymeren mit anderen Polyolefinen ist attraktiv, weil letztere relativ preiswert sind und die entsprechenden Legierungen somit Kostenvorteile bieten. Als Polyolefine werden Polymere genannt, die sich von offenkettigen nicht cyclischen Olefinen ableiten, beispielsweise Polypropylen und Polyethylen oder Polyolefinco- und -terpolymere und/oder deren Pfropfcopolymere. Als Zusatzstoffe werden Cycloolefin-Blockcopolymere genannt. Diese bestehen aus harten und weichen Blöcken und haben die Funktion von Verträglichkeitsvermittlern zwischen den Phasen des Polymerblends. Diese Schrift offenbart ein Verfahren, bei dem man ausgehend von günstigen Kombinationen von Cycloolefinpolymeren, Polyolefinen und Zusatzstoffen zu Polymerlegierungen gelangt, die ein möglichst hohes Niveau der Werkstoffeigenschaften, insbesondere Festigkeit, Härte, Wärmeformbeständigkeit und Zähigkeit aufweisen.

DE 195 36 043 A1 offenbart eine Polyolefinfolie mit ausgewähltem amorphem Cycloolefinpolymer und weiterem Polyolefin, vorzugsweise Polypropylen, wie isotaktischem Propylenhomopolymer, oder Mischungen von Propylenhomo- oder -copolymeren mit anderen Polyolefinen, wie beispielsweise HDPE, LDPE und LLDPE. Für das Erzeugen von homogenen Polymermischungen wird in dieser Schrift vorgeschlagen, das mittlere Molekulargewicht des amorphen Cycloolefinpolymeren innerhalb gewisser Grenzen zu wählen und ein bestimmtes Verhältnis von Molekulargewicht des Cycloolefinpolymeren zum Molekulargewicht des weiteren Polyolefins einzuhalten.

Schließlich ist aus WO 2004/026946 A1 ein Verfahren zur Herstellung einer Verpackung bekannt, worin eine thermoformbare Folie mit hoher Wärmeformbeständigkeit und Wasserdampfbarriere zum Einsatz gelangt. Die Folie enthält ein Cycloolefincopolymer mit einer Glasübergangstemperatur zwischen 65 und 200°C und kann daneben Polyethylene verschiedener Dichten enthalten, beispielsweise HDPE, LDPE und LLDPE, oder andere Polymere, wie Ethylen-Vinylacetat-Copolymer oder Polypropylen.

Aus dem Stand der Technik sind auch bereits Gemische aus COC-Elastomer und aus amorphem COC bekannt. So beschreibt WO 2011/129869 A1 Gemische aus amorphen Cycloolefinpolymeren und aus teilkristallinen, elastomeren Norbornen-Ethylen-Copolymeren mit erhöhter Zähigkeit. Der Anteil von amorphem COC im Gemisch beträgt 60 bis 99 Gew. % und der Anteil von Norbornen-Ethylen-Elastomer im Gemisch beträgt 40 bis 1 Gew. %. Hier wird also ein amorphes COC durch Zusatz geringer Mengen von COC-Elastomer modifiziert.

US 2012/0021151 A und US 2012/0003410 A1 beschreiben transparente und flexible Produkte enthaltend teilkristalline Cycloolefin-Elastomere sowie Rohre und Schläuche daraus für den Einsatz im Medizinbereich. Diese Schriften enthalten auch Hinweise auf den Einsatz von Mischungen aus teilkristallinen Cycloolefin-Elastomeren und aus amorphen Cycloolefin-Copolymeren mit höheren Glasübergangstemperaturen. Letztere sind in diesen Mischungen jedoch in deutlichem Überschuss enthalten. Auch hier wird ein amorphes COC durch Zusatz geringer Mengen von COC-Elastomer modifiziert.

Es wurden jetzt ausgewählte Mischungen auf der Basis von elastomeren Cycloolefin-Ethylen-Copolymeren als Hauptkomponente mit Zusätzen von ausgewählten Polyolefinen gefunden, welche zu Formkörpern mit hohem Niveau an Werkstoffeigenschaften verarbeitet werden können. Diese Formkörper zeichnen sich insbesondere durch hohe E-Moduli, Reißdehnungen, Charpy-Schlagzähigkeiten, Barriere-Eigenschaften, elektrische Eigenschaften und chemische Beständigkeit aus, sowie durch eine geringe Löslichkeit in unpolaren Flüssigkeiten, wie Kohlenwasserstoffen. Außerdem ist die Adsorptionsneigung bei Formkörpern aus diesen Mischungen deutlich verringert gegenüber Formkörpern aus reinen COC-Elastomeren.

Aufgabe der vorliegenden Erfindung ist daher die Bereitstellung von Cycloolefin-copolymer-Zusammensetzungen und von daraus hergestellten Formkörpern mit den vorstehend genannten Eigenschaften.

Die vorliegende Erfindung betrifft Zusammensetzungen enthaltend
a) 99 bis 45 Gew. % eines teilkristallinen Cycloolefin-Copolymeren mit einer Glasübergangstemperatur von kleiner als 30°C, das hergestellt wurde durch ringerhaltende Copolymerisation von ein oder mehreren polycyclischen Olefinmonomeren mit Ethylen und gegebenenfalls weiteren damit copolymerisierbaren ethylenisch-ungesättigten Comonomeren, und
b) 1 bis 55 Gew. % einer Komponente b1) und/oder b2), wobei Komponente b1) ein amorphes Cycloolefinpolymer mit einer Glasübergangstemperatur im Bereich von 30 bis 200°C ist, das hergestellt wurde durch ringerhaltende Copolymerisation von ein oder mehreren polycyclischen Olefinmonomeren mit Ethylen und gegebenenfalls weiteren damit copolymerisierbaren ethylenisch-ungesättigten Monomeren oder durch ringöffnende Polymerisation von ein oder mehreren monocyclischen oder polycyclischen Monomeren und gegebenenfalls weiteren damit copolymerisierbaren Monomeren und gegebenenfalls einer sich daran anschließenden Hydrierung, und Komponente b2) ein Polymer ist, das ausgewählt wird aus der Gruppe der teilkristallinen Ethylen-Homopolymeren, der Ethylen-C₃-C₈- alpha-Olefin-Copolymeren, der teilkristallinen Propylen-Homopolymeren, der teilkristallinen Propylen- C₄-C₈-alpha-Olefin-Copolymeren oder von Kombinationen von zwei oder mehreren dieser Polymeren,
wobei die Gewichtsangaben auf die Gesamtmenge von Komponenten a) und b) bezogen sind.

Bei den erfindungsgemäß als Komponente a) und als Komponente b1) eingesetzten Cycloolefinpolymeren handelt es sich um an sich bekannte Polymere. Diese werden im Falle der Komponente a) durch ringerhaltende Copolymerisation hergestellt oder im Falle der Komponente b1) durch ringerhaltende Copolymerisation oder auch durch ringöffnende Polymerisation von cyclischen Monomeren und gegebenenfalls weiteren damit copolymerisierbaren Monomeren, wobei sich an die ringöffnende Polymerisation ein Hydrierungsschritt anschließen kann.

Bevorzugt werden als Komponenten a) und b1) unter ringerhaltender Copolymerisation hergestellte Cycloolefincopolymere eingesetzt.

Die erfindungsgemäß als Komponente a) und b1) eingesetzten Cycloolefinpolymeren leiten sich von polycyclischen Olefinmonomeren oder von deren Gemischen ab. Unter polycyclischen Olefinmonomeren sind organische Verbindungen zu verstehen, die im Molekül zwei oder mehrere Ringe aufweisen, die aus miteinander verbundenen Atomen bestehen und die eine Doppelbindung in einem der Ringe enthalten. Diese polycyclischen Olefinmonomeren werden mit Ethylen und gegebenenfalls mit weiteren damit copolymerisierbaren Monomeren, beispielsweise mit weiteren monocyclischen oder nicht-cyclischen Olefinen, unter Ringerhaltung copolymerisiert oder können im Falle der Komponente b1) auch durch Ringöffnung von polycyclischen Olefinmonomeren homo- oder copolymerisiert sein.

Bei den als Komponente a) und b1) eingesetzten Cycloolefin-Ethylen-Copolymeren handelt es sich hauptsächlich um lineare Typen. Die Abfolge unterschiedlicher Monomereinheiten in diesen Cycloolefin-Ethylen-Copolymeren kann statistisch oder in der Form von Blöcken sein. Die einzelnen Monomereinheiten können sterisch unterschiedlich angeordnet sein, beispielsweise isotaktisch, syndiotaktisch oder ataktisch. Vorzugsweise handelt es sich um Copolymere mit statistisch angeordneter Abfolge von Monomereinheiten.

Ein typisches als Komponente a) einsetzbares elastomeres COC ist das Produkt TOPAS ELASTOMER^{®} E-140 (Hersteller: TOPAS Advanced Polymers GmbH, Frankfurt am Main). Formkörper aus diesem Produkt zeigen die unten aufgeführten Eigenschaften. Im Gegensatz zu amorphen COC-Sorten ist E-140 gegen unpolare Kohlenwasserstoff-Lösungsmittel resistent und schwillt darin nicht oder wird darin nicht aufgelöst. In dieser Hinsicht ist dieses Material vergleichbar mit anderen teilkristallinen Polyolefinen wie Polyethylenen (PE) oder Polypropylenen (PP). Dies beeinflusst auch die Eigenschaften von Mischungen mit elastomeren COC, wie TOPAS^{®} E-140, als Mehrheitskomponente. Datenblätter von TOPAS^{®} E-140 finden sich im Internet unter http://www.topas.com/tech-center/datasheets.

Darin werden für TOPAS^{®}-Type ELASTOMER E-140 unter anderem folgende Eigenschaften genannt:
Dichte: 940 kg/m³ (ISO 1183)
Schmelzevolumenrate (MVR): 12,0 cm³/10 min bei 260°C und 2,16 kg (ISO 1133)
Schmelzflussrate (MFR): 3 cm³/10 min bei 260°C und 2,16 kg (ISO 1133)
Zugmodul (1 mm/min): 50 MPa (ISO 527-2/1A)
Bruchspannung (50 mm/min): 46 MPa (ISO 527-2/1A)
Bruchdehnung (50 mm/min): >500 % (ISO 527-2/1A)
Zugmodul (1 mm/min bei -50 °C): 1700 MPa (ISO 527-2/1A)
Bruchspannung (50 mm/min bei -50 °C): 26 MPa (ISO 527-2/1A)
Bruchdehnung (50 mm/min bei -50 °C): >200 % (ISO 527-2/1A)
Reißfestigkeit: 47 kN/m (ISO 34-1)
Druckverformung (72 h / 23 °C): 32 % (ISO 815)
Druckverformung (24 h / 60 °C): 90 % (ISO 815)
Härte Shore A: 89 (ISO 868)
Schmelztemperatur (10 °C/min): 84 °C (ISO 11357)
Vicat-Erweichungstemperatur A50 (50 °C/h 10N): 64 °C (ISO 306)
Wasserdampfpermeabilität (23 °C, 85 % rel. Feuchte): 1,0 gx100µm / m² x Tag (ISO 15106-3)
Wasserdampfpermeabilität (38 °C, 90 % rel. Feuchte): 4,6 gx100µm / m² x Tag (ISO 15106-3)
Sauerstoffpermeabilität (23 °C, 50 % rel. Feuchte): 1200 cm³x100µm / m²xTagxbar (ASTM D 3985)

Typische als Komponente b1) einsetzbare amorphe COC sind die TOPAS^{®}-Typen 6017, 6013 und 8007. Formkörper aus dem Produkt TOPAS^{®} 8007 (Hersteller: TOPAS Advanced Polymers GmbH, Frankfurt am Main) zeigen die unten aufgeführten Eigenschaften. Datenblätter von diesen amorphen COC, wie TOPAS^{®} 8007, finden sich im Internet unter http://www.topas.com/tech-center/datasheets.

Darin werden für TOPAS^{®}-Type 8007S-04 unter anderem folgende Eigenschaften genannt:
Dichte: 1010 kg/m³ (ISO 1183)
Schmelzevolumenrate (MVR): 32,0 cm³/10 min bei 260°C und 2,16 kg (ISO 1133)
Wasseraufnahme (23°C,Sättigung): 0,01 % (ISO 62)
Wasserdampfpermeabilität (23 °C, 85 % rel. Feuchte): 0,025 g x mm / m² x Tag (DIN 53122)
Zug-E-Modul: 2600 MPa (ISO 527-2/1A)
Streckspannung (50 mm/min): 63 MPa (ISO 527-2/1A)
Streckdehnung (50 mm/min): 4,5 % (ISO 527-2/1A)
Charpy Schlagzähigkeit (+23°C): 20 KJ/m² (ISO 179/1 eU)
Charpy Kerbschlagzähigkeit (+23°C): 2,6 KJ/m² (ISO 179/1 eA)
Glasübergangstemperatur (10°C/min): 78 °C (ISO 11357-1,-2,-3)
DTUL (0,45 MPa): 75 °C (ISO 75-1, -2)
Vicat-Erweichungstemperatur VST/B/50: 80 °C (ISO 306)
Brennbarkeit bei nominal 1,6 mm (ISO 1210): HB Class (UL 94)
geprüfte Probenkörperdicke: 1,6 mm (UL 94)
Dielektrizitätszahl bei 1-10 kHz: 2,35 (IEC 60250)
spezifischer Durchgangswiderstand: > 1 E14 ohm x m (IEC 60093)
Vergleichszahl der Kriechwegbildung CTI: > 600 (IEC 60112)
Lichttransmission: 91 % (ISO 13468-2)
Brechungsindex: 1,53 (ISO 489)

Die als Komponente a) eingesetzten teilkristallinen COC-Elastomere haben eine Glasübergangstemperatur von kleiner als 30 °C, vorzugsweise von kleiner gleich 10 °C und besonders bevorzugt von -20 °C bis + 10 °C, ermittelt durch DSC-Messungen.

Bevorzugt als Komponente a) eingesetzte teilkristalline COC-Elastomere haben eine Kristallitschmelztemperatur von kleiner gleich 125 °C und vorzugsweise von 60 °C bis 110 °C, ermittelt durch DSC-Messungen.

Ganz besonders bevorzugt als Komponente a) eingesetzte teilkristalline COC-Elastomere weisen eine Glasübergangstemperatur im Bereich von -20 °C bis +10 °C und eine Kristallitschmelztemperatur im Bereich von 60 °C bis 110 °C auf.

Die als Komponente a) eingesetzten COC-Elastomere sind teilkristallin. Der Kristallinitätsgrad beträgt vorzugsweise kleiner gleich 40 %, insbesondere kleiner gleich 30 % und ganz besonders bevorzugt 10 % bis 30 %, ermittelt durch DSC-Messungen.

Bevorzugt eingesetzte Komponenten b1) sind die oben beschriebenen amorphen COC-Typen, insbesondere die durch ringerhaltene Copolymerisation hergestellten Typen.

Als Komponente b2) können ausgewählte Polyethylene und/oder Polypropylene eingesetzt werden. Dabei handelt es sich um teilkristalline Ethylen-Homopolymere, die vorzugsweise eine Kristallit-Schmelztemperatur von 130 bis 140°C aufweisen, um teilkristalline Ethylen-C₃-C₈- alpha-Olefin-Copolymere, die vorzugsweise eine Kristallit-Schmelztemperatur von 50 bis 130 °C aufweisen, um teilkristalline PropylenHomopolymere, die vorzugsweise eine Kristallit-Schmelztemperatur von 160 bis 165°C weisen und/oder um teilkristalline Propylen- C₄-C₈-alpha-Olefin-Copolymere, die vorzugsweise eine Kristallit-Schmelztemperatur von 100 bis 160°C aufweisen.

Beispiele für C₃-C₈-alpha-Olefine sind Propylen, Buten-1, Hexen-1,Octen-1 . Es können Homo- oder Copolymere auf der Basis von Ethylen oder Propylen eingesetzt werden.

Bei den ausgewählten Polyolefinen der Komponente b2) handelt es sich um lineare oder um verzweigte Typen. Die Abfolge unterschiedlicher Monomereinheiten in diesen Polyolefinen kann statistisch oder in der Form von Blöcken sein. Die einzelnen Monomereinheiten können sterisch unterschiedlich angeordnet sein, beispielsweise isotaktisch, syndiotaktisch oder ataktisch.

Bevorzugte Komponenten b2) sind Polyolefinhomopolymere abgeleitet von Ethylen oder Propylen oder Polyolefincopolymere abgeleitet von Ethylen und/oder Propylen mit einem Anteil von bis zu 10 Gew. % an höheren alpha-Olefinen mit 4-8-C-Atomen. Unter Copolymeren sind in diesem Zusammenhang auch Polymere zu verstehen, die sich von drei oder mehr unterschiedlichen Monomeren ableiten.

Ganz besonders bevorzugt eingesetzte Komponenten b2) sind Polyethylen mit hoher Dichte (HDPE), mittlerer Dichte (MDPE) und niedriger Dichte (LDPE). Diese Polyethylene werden nach dem Nieder- oder Hochdruckverfahren mit entsprechenden Katalysatoren hergestellt und zeichnen sich durch niedrige Dichte im Vergleich mit anderen Kunststoffen (<0,96 g/cm³), durch hohe Zähigkeit und Reißdehnung, durch sehr gute elektrische und dielektrische Eigenschaften, durch sehr gute Chemikalienbeständigkeit, und je nach Typ durch hohe Beständigkeit gegen Spannungsrissbildung und gute Ver- und Bearbeitbarkeit aus.

Die Polyethylen-Moleküle enthalten Verzweigungen. Der Grad der Verzweigung der Molekülketten und die Länge der Seitenketten beeinflussen die Eigenschaften des Polyethylens wesentlich. Die HDPE- und MDPE-Typen sind wenig und nur mit kurzen Seitenketten verzweigt.

Polyethylen kristallisiert beim Abkühlen aus der Schmelze. Dabei ordnen sich die langen Molekülketten in Teilbereichen gefaltet und bilden sehr kleine Kristallite, die zusammen mit amorphen Zonen zu Überstrukturen, den sogenannten Sphärolithen verbunden sind. Die Kristallisation ist umso besser möglich, je kürzer die Ketten sind und je geringer der Verzweigungsgrad ist. Der kristalline Anteil weist eine höhere Dichte auf als der amorphe Anteil. Man erhält daher unterschiedliche Dichten, abhängig vom kristallinen Anteil. Dieser Kristallisationsgrad beträgt je nach Polyethylen-Typ zwischen 35 % und 80 %.

Bei Polyethylen hoher Dichte (HDPE) werden 60 % bis 80 % Kristallisationsgrad bei Dichten zwischen 0,940 g/cm³ und 0,97 g/cm³ erreicht. Bei Polyethylen mittlerer Dichte (MDPE) werden 50 % bis 60 % Kristallisationsgrad bei 0,930 g/cm³ bis 0,940 g/cm³ Dichte erreicht. Bei Polyethylen niedriger Dichte (LDPE) werden 40 % bis 50 % Kristallisationsgrad bei Dichten zwischen 0,915 g/cm³ und 0,935 g/cm³ erreicht. Bei diesem Typ handelt es sich um stark verzweigte Polymerketten, welche eine niedrige Dichte zur Folge haben.

Darüber hinaus kennt man noch lineares Polyethylen niedriger Dichte (LLDPE). Dessen Polymermolekül weist nur kurze Verzweigungen auf. Diese Verzweigungen werden durch Copolymerisation von Ethylen und höheren α-Olefinen, wie Buten, Hexen oder Octen, hergestellt. Der Kristallisationsgrad dieses Typs beträgt 10 bis 50 % und die Dichte liegt im Bereich von 0,87 g/cm³ bis 0,940 g/cm³.

Die Eigenschaften von Polyethylen werden vorwiegend durch Dichte, Molmasse und Molmassenverteilung bestimmt. So nimmt z. B. die Schlag- und Kerbschlagzähigkeit, Reißfestigkeit, die Reißdehnung und der Widerstand gegen Spannungsrissbildung mit der Molmasse zu. Engverteiltes HDPE mit geringem niedermolekularem Anteil ist schlagzäher, auch bei tiefer Temperatur, als breitverteiltes innerhalb gleicher Bereiche für Schmelzindex und Viskositätszahl. Breitverteilte Typen wiederum sind leichter verarbeitbar.

Polypropylen ist ein mit Hilfe stereospezifisch wirkender Katalysatoren hergestelltes isotaktisches, syndiotaktisches oder ataktisches Polypropylen. Besonders bevorzugt wird das isotaktische Polypropylen, bei dem alle Methylgruppen auf einer Seite der zickzackförmig gedachten Molekülkette angeordnet sind, in den erfindungsgemäßen Zusammensetzungen als Komponente b2) eingesetzt.

Bei Abkühlen aus der Schmelze begünstigt der regelmäßige Aufbau des isotaktischen Polypropylens das Entstehen kristalliner Bereiche. Die Kettenmoleküle werden jedoch selten in ganzer Länge in einen Kristallit eingebaut, da sie auch nichtisotaktische und damit nicht kristallisationsfähige Anteile enthalten. Außerdem entstehen amorphe Bereiche durch die Verschlaufungen der Ketten in der Schmelze, besonders bei hohem Polymerisationsgrad. Der kristalline Anteil ist von den Herstellbedingungen der Formteile abhängig und beträgt 50 % bis 70 %. Der teilkristalline Aufbau bewirkt wegen der hohen Sekundärkräfte im Kristallit etwas Festigkeit und Steifheit; während die ungeordneten Bereiche mit der höheren Beweglichkeit ihrer Kettensegmente oberhalb der Einfriertemperatur Flexibilität und Zähigkeit ergeben.

Die Dichte von Polypropylen ist sehr niedrig und liegt zwischen 0,895 g/cm³ und 0,92 g/cm³. Formkörper aus Polypropylen zeichnen sich im Vergleich mit Formkörpern aus Polyethylenen durch höhere Steifigkeit, Härte und Festigkeit aus. Polypropylen hat eine Glasübergangstemperatur von 0 bis -10 °C. Der Kristallit-Schmelzbereich liegt bei 160 bis 165 °C. Diese Temperaturen können durch Copolymerisation modifiziert werden; dem Fachmann sind die Maßnahmen dafür bekannt.

Bevorzugte Komponenten b) sind HDPE, MDPE, LDPE, LLDPE, HMWPE, UHMWPE, Propylenhomopolymere, Propylencopolymere mit 1-10 Gew. % an Struktureinheiten, die von 1-Alkenen mit 4-8 C-Atomen abgeleitet sind, Propylenethylencopolymere mit 10 bis 90 Gew. % an von Propylen abgeleiteten Struktureinheiten sowie Kombinationen von zwei oder mehreren davon.

Bei der Kombination der Komponenten a) und b) entstehen in der Regel unverträgliche Polymergemische. Das bedeutet die Bildung von heterogenen Systemen. Die erfindungsgemäßen Zusammensetzungen sind in der Regel daher trüb.

So besitzen COC-Elastomere, wie TOPAS^{®} E-140, und amorphe TOPAS^{®} Sorten mit höherer Glasübergangstemperatur hohe Transparenz und niedrige Trübungswerte. Mischungen aus beiden werden aufgrund der Multiphasen-Natur dieser Mischungen weniger transparent sein. In den Mischungen werden verschiedene Komponenten diskrete Phasen der einzelnen Materialien bilden. Diese Eigenschaft führt zu reduzierter Transparenz der Mischungen von diesen Komponenten.

In einer besonders bevorzugten Ausführungsform werden in den erfindungsgemäßen Zusammensetzungen Komponenten a) und b) eingesetzt, deren Brechungsindizes sich nicht oder nur wenig unterscheiden. Diese Zusammensetzungen weisen eine deutlich höhere Transparenz auf als Zusammensetzungen aus Komponenten a) und b) mit deutlich unterschiedlichen Brechungsindizes. Bevorzugt werden Komponenten a) mit einem Brechungsindex im Bereich von 1,50 bis 1,52 in Kombination mit Komponenten b1) und/oder b2) mit einem Brechungsindex von 1,49 bis 1,53 eingesetzt.

Bevorzugt zur Herstellung von erfindungsgemäß eingesetzten Cycloolefinpolymeren eingesetzte polycyclische Olefinmonomere sind Verbindungen der nachstehenden Formeln I bis VI 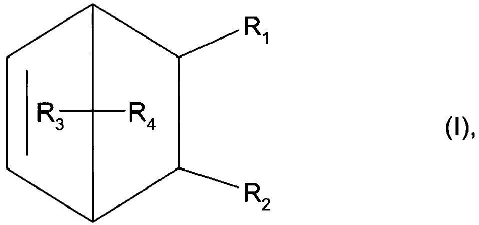 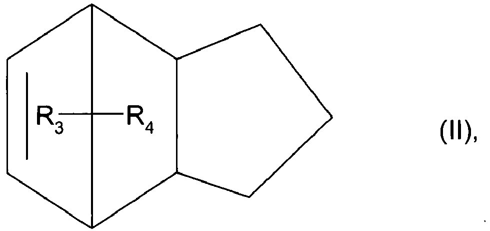 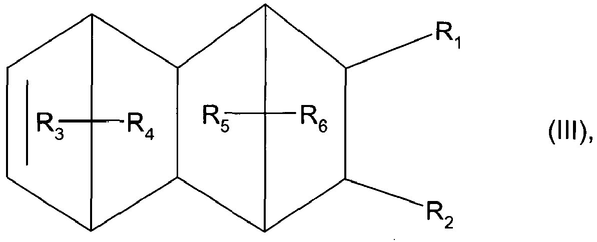 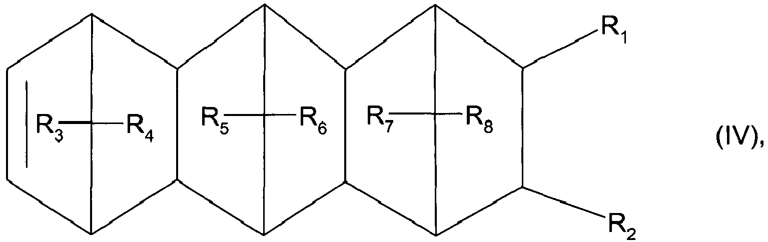 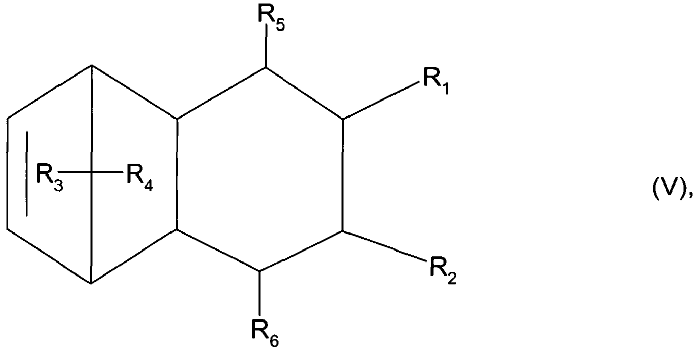 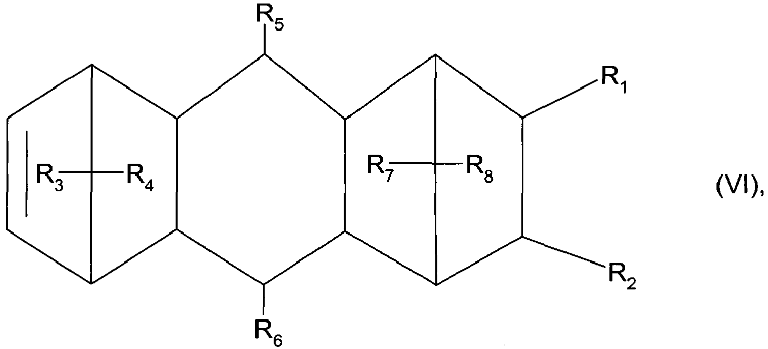 worin R₁, R₂, R₃, R₄, R₅, R₆, R₇ und R₈ gleich oder verschieden sind und ein Wasserstoffatom oder einen C₁-C₈-Alkylrest bedeuten, wobei gleiche Reste in den verschiedenen Formeln einen unterschiedliche Bedeutung haben können.

Unter C₁-C₈-Alkylresten sind im Rahmen dieser Beschreibung geradkettige oder verzweigte gesättigte aliphatische Kohlenwasserstoffreste mit 1-8 C-Atomen zu verstehen, wie Methyl, Ethyl, n-Propyl, Isopropyl, n-Butyl, sek.Butyl, tert.Butyl, n-Pentyl, n-Hexyl, 2-Ethylhexyl, n-Heptyl oder n-Octyl.

Die bevorzugten polyzyklischen Olefinmonomere der Formeln I bis VI können einzeln oder kombiniert miteinander zusammen mit Ethylen unter Ringerhaltung polymerisiert werden oder im Falle der ringöffnenden Polymerisation auch einzeln allein oder kombiniert miteinander oder zusammen mit Comonomeren.

Als gegebenenfalls weitere einsetzbare Comonomere eignen sich beispielsweise die zyklischen Olefine der Formel VII und/oder die nicht-zyklischen Olefine der Formel VIII 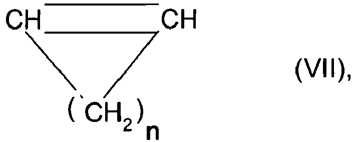 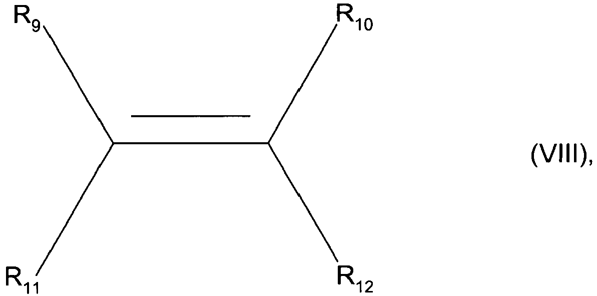
worin n eine ganze Zahl von 2 bis 10 ist und
R₉ einen C₁-C₈-Alkylrest bedeutet, und
R₁₀, R₁₁ und R₁₂ gleich oder verschieden sind und ein Wasserstoffatom oder einen C₁-C₈-Alkylrest bedeuten.

Bevorzugte Monomere der Formel VIII sind C₃-C₈- alpha-Olefine.

Es werden insbesondere Copolymere hergestellt aus polycyclischen Olefinmonomeren der Formeln I oder III und aus Ethylen eingesetzt.

Besonders bevorzugt eingesetzte Cycloolefine leiten sich von Norbornen oder Tetracyclododecen ab, die mit Ethylen copolymerisiert worden sind, wobei Norbornen-Ethylen-Copolymere von besonderer Bedeutung sind.

Die Polymerisation der genannten Monomeren kann unter ringerhaltendenen Bedingungen oder unter ringöffnenden Bedingungen ablaufen. Bei ringerhaltender Polymerisation bleibt die polycyclische Struktur des oder der eingesetzten Monomeren erhalten und diese werden unter Öffnung der olefinischen Bindung in die Polymerkette eingebaut. Bei der ringöffnenden Polymerisation ändert sich die Struktur des eingesetzten polycyclischen Monomeren und es bilden sich andere Ringstrukturen und gegebenenfalls Doppelbindungen aus, welche in der Polymerkette auftreten und welche gegebenenfalls in einem nachfolgenden Schritt hydriert werden. Der Verlauf einer Polymerisation hängt von der Auswahl des bei der Polymerisation eingesetzten Katalysatorsystems ab. Dem Fachmann ist dieses bekannt.

Unter Cycloolefinpolymeren werden im Rahmen dieser Beschreibung Polymere verstanden, die durch Copolymerisation von ein oder mehreren polycyclischen Olefinmonomeren mit Ethylen und gegebenenfalls weiteren damit copolymerisierbaren ethylenisch-ungesättigten Comonomeren unter ringerhaltenden Bedingungen hergestellt worden sind, oder die durch Homo- oder Copolymerisation von ein oder mehreren polycyclischen Olefinmonomeren mit gegebenenfalls weiteren damit copolymerisierbaren ethylenisch-ungesättigten Comonomeren unter ringöffnenden Bedingungen hergestellt worden sind, und die gegebenenfalls in einem nachfolgenden Schritt hydriert worden sind. Ein Schema für eine ringerhaltende sowie für eine ringöffnende Polymerisation von polycyclischem Olefinmonomer findet sich in WO 2011/129869 A1.

Die unter Öffnung der Doppelbindung verlaufenden Cycloolefinpolymerisationen können z.B. mit Katalysatorsystemen gemäß EP-A-0 407 870 oder EP-A-0 203 799 als auch mit einem klassischen Ziegler-Katalysatorsystem durchgeführt werden (vergl. z.B. DD-A-222 317).

Die Stoffzusammensetzungen können auch Cycloolefinpolymere enthalten, die unter Ringöffnung in Gegenwart beispielsweise von Wolfram-, Molybdän-, Rhodium- oder Rhenium-haltigen Katalysatoren polymerisiert wurden. Die dabei erhaltenen Cycloolefinco-polymere besitzen Doppelbindungen, die durch Hydrierung entfernt werden können (vergl. z.B. US-A-3 557 072 und US-A-4 178 424).

Vorzugsweise werden durch ringerhaltende Copolymerisation in Gegenwart von Metallocenkatalysatoren hergestellte Cycloolefinpolymere eingesetzt. Unter diesen Bedingungen wird die zyklische Struktur der Cyloolefinmonomeren beibehalten und in die entstehende Polymerkette eingebaut.

Alternativ oder zusätzlich zu den vorstehend genannten Cycloolefinpolymeren mit erhaltener zyklischer Struktur der Olefinmonomeren können erfindungsgemäß unter ringöffnender Polymerisation hergestellte Typen bzw. davon abgeleitete hydrierte Typen eingesetzt werden.

Vorzugsweise werden durch ringerhaltende Copolymerisation in Gegenwart von Metallocenkatalysatoren hergestellte Cycloolefin-Copolymere in den erfindungsgemäßen Zusammensetzungen und insbesondere als Komponenten a) und b1) eingesetzt. Unter diesen Bedingungen wird die polycyclische Struktur der Cyloolefinmonomeren beibehalten und in die entstehende Polymerkette eingebaut.

Cycloolefincopolymere, die Struktureinheiten abgeleitet von Monomeren der Formeln I bis VI oder VII enthalten, werden bevorzugt mit Hilfe eines homogenen Katalysators hergestellt. Dieser besteht vorzugsweise aus einem Metallocen, dessen Zentralatom ein Metall aus der Gruppe Titan, Zirkon, Hafnium, Vanadium, Niob und Tantal ist, welches mit zwei miteinander verbrückten ein- oder mehrkernigen Liganden eine Sandwichstruktur bildet, und einem Aluminoxan. Diese Reaktion ist bekannt und beispielsweise in EP 0 566 988 A1 und den dort erwähnten Dokumenten beschrieben.

Für Cycloolefincopolymere abgeleitet von Norbornen und Ethylen ist es bekannt, dass die Glasübergangstemperatur durch Auswahl des Verhältnisses von Norbornen zu Ethylen eingestellt werden kann. Hohe Anteile an Norborneneinheiten im Copolymer bedeuten hohe Glasübergangstemperaturen. Für Copolymere abgeleitet von anderen bi- oder polycyclischen Olefinen und Ethylen gilt Entsprechendes.

Unter Glasübergangstemperatur und Kristallitschmelztemperatur sind im Rahmen der vorliegenden Beschreibung die nach ISO 11373 mit der Differential-Scanning-Calorimetrie (DSC) Methode bestimmten Größen zu verstehen, wobei die Aufheizgeschwindigkeit 10 K/Minute beträgt.

Bevorzugt werden Zusammensetzungen enthaltend als Komponente b1) ein amorphes Cycloolefin-Copolymer mit einer Glasübergangstemperatur im Bereich von 30 bis 200°C.

Weitere bevorzugte Zusammensetzungen sind dadurch gekennzeichnet, dass das teilkristalline Cycloolefin-Copolymer und/oder das amorphe Cycloolefin-Copolymer durch ringerhaltende Copolymerisation von Ethylen und Norbornen hergestellt worden ist.

Besonders bevorzugte Zusammensetzungen enthalten als Komponente a) ein teilkristallines Cycloolefin-Copolymer mit einer Glasübergangstemperatur von -20°C bis +10°C und mit einer Kristallitschmelztemperatur von 60°C bis 110°C ist.

Ganz besonders bevorzugte Zusammensetzungen weisen einen Anteil an Komponente a) von 90 bis 70 Gew. % auf und einen Anteil an Komponente b1) und/oder b2) von insgesamt 10 bis 30 Gew. %.

Die erfindungsgemäßen Zusammensetzungen können Additive enthalten, beispielsweise thermische Stabilisatoren, UV-Stabilisatoren, Antistatika, Flammschutzmittel, Plastifizierer, Gleit- und Schmiermittel, Pigmente, Farbstoffe, optische Aufheller, Verarbeitungshilfsmittel, anorganische und organische Füllstoffe, d.h. insbesondere auch verstärkende Materialien, wie Glas-, Kohle- oder Hochmodulfasern, oder Kombinationen von zwei oder mehreren dieser Additive.

Der Anteil an Additiven in den erfindungsgemäßen Zusammensetzungen beläuft sich üblicherweise auf zwischen 0 und 25 Gew. %, vorzugsweise auf zwischen 0,1 und 20 Gew. % und besonders bevorzugt auf zwischen 0,5 und 10 Gew. %, bezogen auf die Gesamtmasse der Zusammensetzung.

Die erfindungsgemäßen Zusammensetzungen können durch für Thermoplasten bekannte Standardmethoden hergestellt und verarbeitet werden, wie z. B. durch Kneten, Pressen, Extrusion oder Spritzguss.

Diese erfindungsgemäßen Zusammensetzungen zeigen Verarbeitungseigenschaften, die auch durch die spezifische Zusammensetzung der Mischung bestimmt werden kann. Die Verarbeitung der reinen Komponenten kann als Leitfaden für das erwartete Verhalten verwendet werden.

Wie die reinen Komponenten können diese Mischungen aus der Schmelze durch bekannte Verfahren verarbeitet werden, wie durch Spritzguss, Spritzblasformen, Spritzgießstreckblasen, Extrusionsblasformen und Rotationsformen. Die höhere Dehnviskosität und Schmelzefestigkeit von COC-Elastomeren, wie z.B. von E-140, erhöht die Eignung von solchen Mischungen für alle Prozesse, welche diese Eigenschaft benötigen, z.B. für das Extrusionsblasformen. Zunehmende Mengen von COC-Elastomeren verbessern daher die Schmelzefestigkeit von Mischungen. Mischungen mit COC-Elastomer-Anteilen von mehr als 50% sollten besonders gut geeignet, da in solchen Mischungen das COC-Elastomer die Matrix der Mischung bildet.

Es ist bekannt, dass E-140 sehr gut an anderen TOPAS-Sorten haftet, vor allem an solchen mit einer Glasübergangstemperatur von unter 100 °C. Somit wurde für die Kombination von TOPAS 8007 mit E-140 in einem 2-Komponenten-Spritzgießverfahren eine sehr gute Haftfähigkeit nachgewiesen, welche oft zu einem Kohäsionsbruch anstelle eines Adhäsionsbruches führt. Außerdem können diese Sorten zu in mehrschichtigen Strukturen co-extrudiert werden, ohne dass dabei eine Klebeschicht zwischen ihnen eingesetzt wird. In diesem Fall wird eine sehr hohe Schälfestigkeit oder sogar ein Kohäsionsbruch in einer der Schichten beobachtet. Das gleiche gilt für die Koextrusion von E-140 mit PE oder PP-Sorten. In diesem Fall zeigen die Copolymere aus PE oder PP verbesserte Adhäsion im Vergleich mit HDPE oder mit PP Homopolymer.

Die erfindungsgemäßen Zusammensetzungen können insbesondere vorteilhaft zur Herstellung von Formkörpern nach dem Preß-, Spritzguß- oder Extrusionsverfahren verarbeitet werden. Beispiele für Formkörper sind Platten, Fasern, Stäbe, Folien und Schläuche.

Diese Formkörper sind ebenfalls Gegenstand der vorliegenden Erfindung. Diese Formkörper zeichnen sich durch die oben genannten vorteilhaften Eigenschaften aus.

Die Erfindung betrifft auch die Verwendung der oben beschriebenen Zusammensetzungen sowie der daraus hergestellten Formkörper in Medizin, Medizintechnik, Lebensmitteltechnik, Elektronik, Elektrotechnik, Behälter- und Apparatebau, Fahrzeugbau oder als Verpackungsmaterialien.

Die erfindungsgemäßen Zusammensetzungen lassen sich zur Herstellung von Behältern, insbesondere von Flaschen, Kartuschen oder Ampullen, einsetzen. Die Herstellung kann beispielsweise durch Extrusionsblasformen, Spritzblasformen, Spritzgießstreck-blasen, Spritzgießen, 2-Komponenten-Spritzgießen oder durch Co-Injektion erfolgen. Es können Behälter aus Monoschichten oder aus mehreren Schichten erzeugt werden. Nach der Herstellung kann sich direkt ein Befüll- und Versiegelungsschritt anschließen.

Die erfindungsgemäßen Zusammensetzungen lassen sich auch zur Herstellung von Dichtungen einsetzen. Die Herstellung kann beispielsweise durch Extrusion und Coextrusion, Spritzgießen, 2-Komponenten-Spritzgießen oder durch Co-Injektion erfolgen. Es können Dichtungen aus Monoschichten oder aus mehreren Schichten (z.B. Coextrudate) erzeugt werden.

Die erfindungsgemäßen Zusammensetzungen lassen sich auch zur Herstellung von Teilen für Inhalatoren einsetzen. Diese können beispielsweise durch Blasformen, Spritzblasformen, Spritzgießen, 2-Komponenten-Spritzgießen oder durch Co-Injektion erzeugt werden. Es können Teile für Inhalatoren aus Monoschichten oder aus mehreren Schichten erzeugt werden. Nach der Herstellung kann sich direkt ein Befüll- und Versiegelungsschritt anschließen.

Die erfindungsgemäßen Zusammensetzungen lassen sich auch zur Herstellung von Beißschienen einsetzen. Diese können beispielsweise durch Extrusion, Spritzgießen, 2-Komponenten-Spritzgießen oder durch Co-Injektion erzeugt werden. Es können Beißschienen aus Monoschichten oder aus mehreren Schichten erzeugt werden.

Die erfindungsgemäßen Zusammensetzungen lassen sich auch zur Herstellung von Injektoren einsetzen, insbesondere von Spritzen oder Ampullen. Diese können beispielsweise durch Spritzgießen, 2-Komponenten-Spritzgießen oder durch Co-Injektion erzeugt werden. Es können Injektoren aus Monoschichten oder aus mehreren Schichten erzeugt werden.

Die erfindungsgemäßen Zusammensetzungen lassen sich auch zur Herstellung von textilen Flächengebilden und Fasern einsetzen, beispielsweise für den technischen oder medizinischen Bereich, insbesondere Filamente, Stapelfasern oder Rovings. Diese können beispielsweise durch Schmelzspinnverfahren erzeugt und verarbeitet werden. Dabei können auch coextrudierte Filamente hergestellt werden.

Die erfindungsgemäßen Zusammensetzungen lassen sich auch zur Herstellung von Folien verwenden, beispielsweise von Tiefziehfolien oder von verstreckten Folien. Diese können beispielsweise durch Flachfolienextrusion und - coextrusion oder durch Blasfolienextrusion und -coextrusion erzeugt werden. Die Folien können ein- oder mehrschichtig sein und mono- oder biaxial verstreckt sein.

Die Abbildungen erläutern die Erfindung. Eine Begrenzung ist dadurch nicht beabsichtigt.

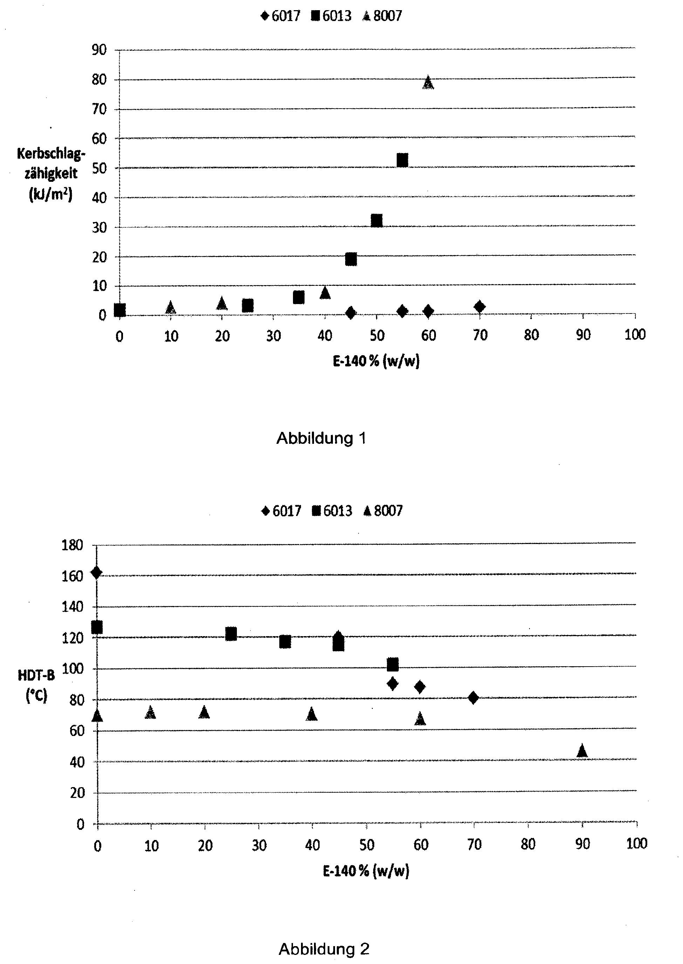

In Abbildung 1 ist die Charpy-Schlagzähigkeit (eingekerbt) in [kJ/m²] Formkörpern aus binären Mischungen aus dem COC-Elastomer TOPAS^{®} E-140 und aus unterschiedlichen amorphen COC Sorten dargestellt. Auf der x-Achse ist der Gewichtsanteil von COC-Elastomer in der Mischung angegeben. Auf der y-Achse sind die Charpy-Schlagzähigkeiten der einzelnen Mischungen angegeben. Als amorphe COC-Sorten wurden die TOPAS^{®}-Typen 6017, 6013 und 8007 eingesetzt. Die Kurven mit den Rauten zeigen die Werte für Gemische von E-140 mit Type 6017 an. Die Kurven mit den Quadraten zeigen die Werte für Gemische von E-140 mit Type 6013 an. Die Kurven mit den Dreiecken zeigen die Werte für Gemische von E-140 mit Type 8007 an. Man erkennt, dass die Werte für die Charpy-Schlagzähigkeit (eingekerbt) mit zunehmendem Anteil an COC-Elastomer deutlich ansteigen.

In Abbildung 2 ist die Wärmeformbeständigkeitstemperatur nach Methode B in [°C] von Formkörpern aus binären Mischungen aus dem COC-Elastomer TOPAS^{®} E-140 und aus unterschiedlichen amorphen COC Sorten dargestellt. Auf der x-Achse ist der Gewichtsanteil von COC-Elastomer in der Mischung angegeben. Auf der y-Achse sind die Wärmeformbeständigkeitstemperaturen der einzelnen Mischungen angegeben. Als amorphe COC-Sorten wurden die TOPAS^{®}-Typen 6017, 6013 und 8007 eingesetzt. Die Kurven mit den Rauten zeigen die Werte für Gemische von E-140 mit Type 6017 an. Die Kurven mit den Quadraten zeigen die Werte für Gemische von E-140 mit Type 6013 an. Die Kurven mit den Dreiecken zeigen die Werte für Gemische von E-140 mit Type 8007 an. Man erkennt, dass die Werte für die Wärmeformbeständigkeitstemperatur mit zunehmendem Anteil an COC-Elastomer deutlich abfallen. Dennoch ist auch festzuhalten, dass dieWärmeformbeständigkeitstemperatur auch bei Anteilen von bis zu 90% E-140 noch deutlich über der von 100% E-140 liegt.

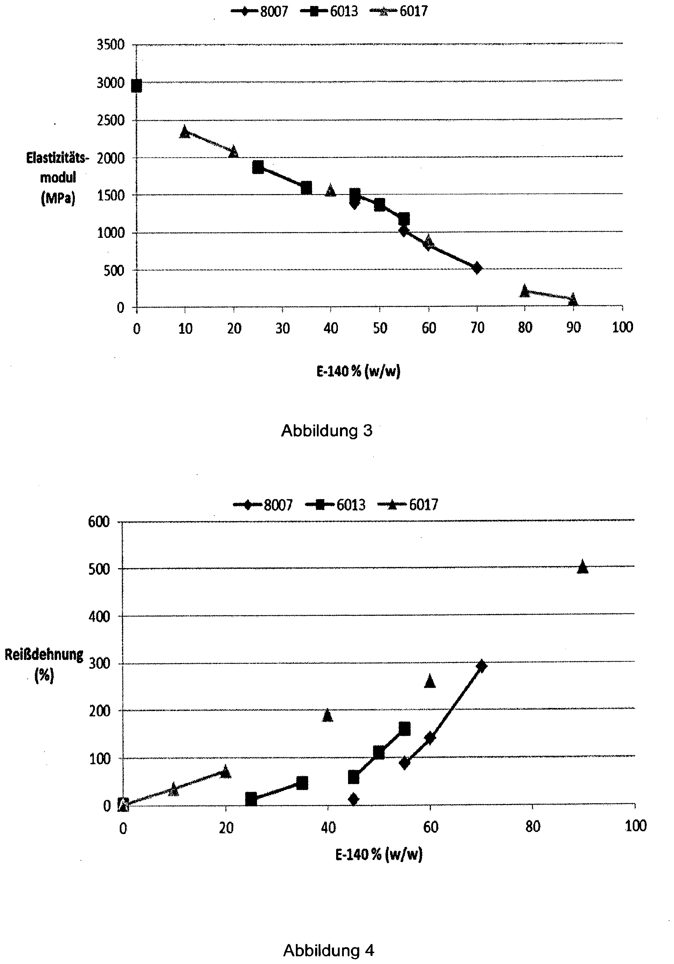

In Abbildung 3 ist der Zugmodul in [MPa] von Formkörpern aus binären Mischungen aus dem COC-Elastomer TOPAS^{®} E-140 und aus unterschiedlichen amorphen COC Sorten dargestellt. Auf der x-Achse ist der Gewichtsanteil von COC-Elastomer in der Mischung angegeben. Auf der y-Achse sind die Zugmoduli der einzelnen Mischungen angegeben. Als amorphe COC-Sorten wurden die TOPAS^{®}-Typen 6017, 6013 und 8007 eingesetzt. Die Kurven mit den Rauten zeigen die Werte für Gemische von E-140 mit Type 8007 an. Die Kurven mit den Quadraten zeigen die Werte für Gemische von E-140 mit Type 6013 an. Die Kurven mit den Dreiecken zeigen die Werte für Gemische von E-140 mit Type 6017 an. Man erkennt, dass die Werte für die Zugmoduli mit zunehmendem Anteil an COC-Elastomer deutlich abfallen. Es ist aber auch hier wichtig festzuhalten, dass schon kleine Anteile an amorphen COC mit Tg über 30°C den Modulus im Vergleich zum reinenE-140 deutlich erhöhen können. So wurde zum Beispiel an einer Folie aus TOPAS 8007 und E-140 (80% w/w) ein Modul von 200 MPa gemessen.

In Abbildung 4 ist die Reißdehnung in [%] von Formkörpern aus binären Mischungen aus dem COC-Elastomer TOPAS^{®} E-140 und aus unterschiedlichen amorphen COC Sorten dargestellt. Auf der x-Achse ist der Gewichtsanteil von COC-Elastomer in der Mischung angegeben. Auf der y-Achse sind die Reißdehnungen der einzelnen Mischungen angegeben. Als amorphe COC-Sorten wurden die TOPAS^{®}-Typen 6017, 6013 und 8007 eingesetzt. Die Kurven mit den Rauten zeigen die Werte für Gemische von E-140 mit Type 8007 an. Die Kurven mit den Quadraten zeigen die Werte für Gemische von E-140 mit Type 6013 an. Die Kurven mit den Dreiecken zeigen die Werte für Gemische von E-140 mit Type 6017 an. Man erkennt, dass die Werte für die Reißdehnung mit zunehmendem Anteil an COC-Elastomer deutlich ansteigen.

Diese Beispiele zeigen, dass durch den Zusatz von amorphem COC zu elastomerem COC die Eigenschaften der entstehenden Mischungen gezielt eingestellt werden können, welche in ihren Grenzen durch die jeweiligen Eigenschaften der reinen Sorten, aus denen sie bestehen, bestimmt werden. Dennoch ist es nicht beabsichtigt zu behaupten, dass ein solches Verhalten für alle Eigenschaften beobachtet werden kann. Ausnahmen von dieser Regel sind daher wohl nicht ausgeschlossen, wenn sie sich manifestieren sollten.

Die elastomere COC-Type E-140 zeigt eine sehr gute Elastizität wie aus der Restdehnung bei Raumtemperatur ersichtlich ist und welche typisch für ein thermoplastisches Elastomer ist. Mit zunehmenden Mengen an nicht elastischen amorphen TOPAS Sorten wird diese Flexibilität nur in niedrigen Konzentrationen des nicht elastischen Partners beibehalten.

## Patentansprüche

1. Zusammensetzungen enthaltend
a) 99 bis 45 Gew. % eines teilkristallinen Cycloolefin-Copolymeren mit einer Glasübergangstemperatur von kleiner als 30°C, das hergestellt wurde durch ringerhaltende Copolymerisation von ein oder mehreren polycyclischen Olefinmonomeren mit Ethylen und gegebenenfalls weiteren damit copolymerisierbaren ethylenisch-ungesättigten Comonomeren, und
b) 1 bis 55 Gew. % einer Komponente b1) und/oder b2), wobei Komponente b1) ein amorphes Cycloolefinpolymer mit einer Glasübergangstemperatur im Bereich von 30 bis 200°C ist, das hergestellt wurde durch ringerhaltende Copolymerisation von ein oder mehreren polycyclischen Olefinmonomeren mit Ethylen und gegebenenfalls weiteren damit copolymerisierbaren ethylenisch-ungesättigten Comonomeren oder durch ringöffnende Polymerisation von ein oder mehreren monocyclischen oder polycyclischen Monomeren und gegebenenfalls weiteren damit copolymerisierbaren Monomeren und gegebenenfalls einer sich daran anschließenden Hydrierung, und
Komponente b2) ein Polymer ist, das ausgewählt wird aus der Gruppe der teilkristallinen Ethylen-Homopolymeren, der teilkristallinen Ethylen-C₃-C₈-alpha-Olefin-Copolymeren, der teilkristallinen Propylen-Homopolymeren, der Propylen-C₄-C₈-alpha-Olefin-Copolymeren oder von Kombinationen von zwei oder mehreren dieser Polymeren,
wobei die Gewichtsangaben auf die Gesamtmenge von Komponenten a) und b) bezogen sind.

2. Zusammensetzungen nach Anspruch 1, **dadurch gekennzeichnet, dass** Komponenten a) und/oder b1) Cyclolefincopolymere sind, die unter ringerhaltender Copolymerisation hergestellt worden sind.

3. Zusammensetzungen nach mindestens einem der Ansprüche 1 oder 2, **dadurch gekennzeichnet, dass** Komponente b1) ein amorphes Cycloolefin-Copolymer mit einer Glasübergangstemperatur im Bereich von 30 bis 200°C ist.

4. Zusammensetzungen nach mindestens einem der Ansprüche 1 bis 3, **dadurch gekennzeichnet, dass** das teilkristalline Cycloolefin-Copolymer und/oder das amorphe Cycloolefin-Copolymer hergestellt ist durch ringerhaltende Copolymerisation von Ethylen, einem polyzyklischen Olefinmonomer und gegebenenfalls einem C₃-C₈- alpha-Olefin.

5. Zusammensetzungen nach mindestens einem der Ansprüche 1 bis 4, **dadurch gekennzeichnet, dass** das polyzyklische Olefinmonomer ausgewählt wird aus der Gruppe der Monomeren der Formeln I bis VI 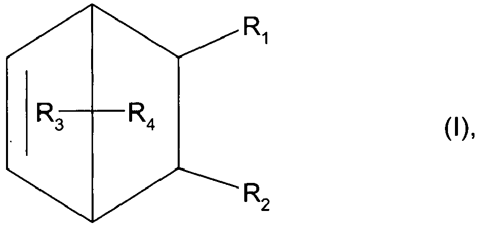 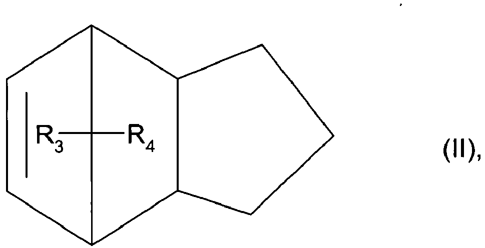 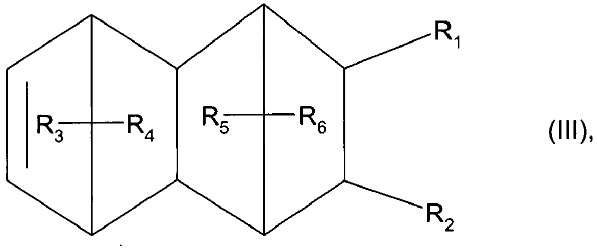 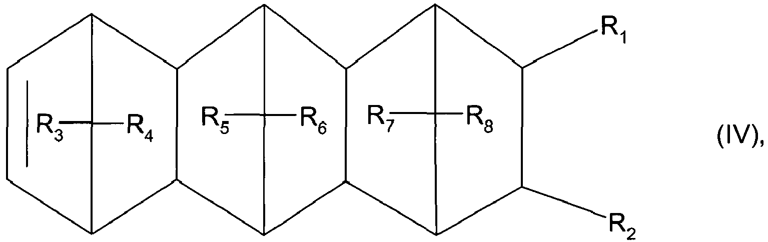 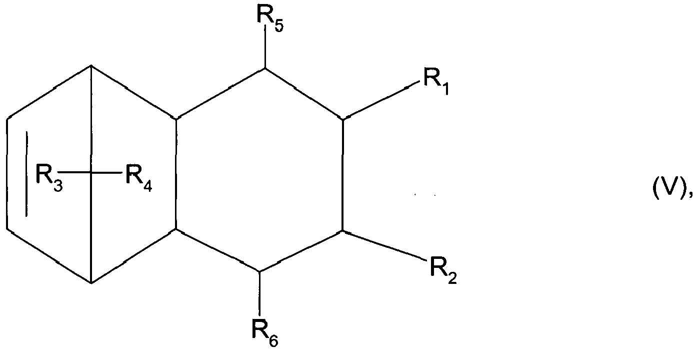 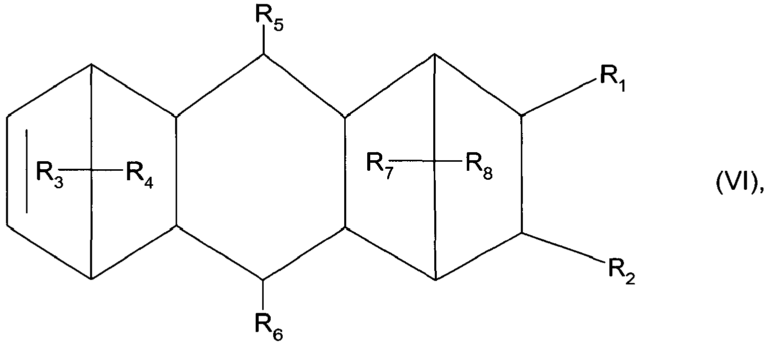 worin R₁, R₂, R₃, R₄, R₅, R₆, R₇ und R₈ gleich oder verschieden sind und ein Wasserstoffatom oder einen C₁-C₈-Alkylrest bedeuten, wobei gleiche Reste in den verschiedenen Formeln einen unterschiedliche Bedeutung haben können.

6. Zusammensetzungen nach mindestens einem der Ansprüche 1 bis 5, **dadurch gekennzeichnet, dass** das teilkristalline Cycloolefin-Copolymer und/oder das amorphe Cycloolefin-Copolymer hergestellt ist durch ringerhaltende Copolymerisation von Ethylen und Norbornen.

7. Zusammensetzungen nach mindestens einem der Ansprüche 1 bis 6, **dadurch gekennzeichnet, dass** Komponente a) ein teilkristallines Cycloolefin-Copolymer mit einer Glasübergangstemperatur von -20°C bis +10°C und einer Kristallitschmelztemperatur von 60°C bis 110°C ist.

8. Zusammensetzungen nach mindestens einem der Ansprüche 1 bis 7, **dadurch gekennzeichnet, dass** Komponente a) ein teilkristallines Cycloolefin-Copolymer ist, dessen durch DSC-Messungen ermittelter Kristallinitätsgrad kleiner gleich 40 % ist.

9. Zusammensetzungen nach mindestens einem der Ansprüche 1 bis 8, **dadurch gekennzeichnet, dass** der Anteil an Komponente a) 90 bis 70 Gew. % und der Anteil an Komponente b1) und/oder b2) insgesamt 10 bis 30 Gew. % beträgt.

10. Formkörper hergestellt durch Schmelzformverfahren einer Zusammensetzung nach mindestens einem der Ansprüche 1 bis 9.

11. Verwendung der Zusammensetzungen nach mindestens einem der Ansprüche 1 bis 9 zur Herstellung von Formkörper zum Einsatz in Medizin, Medizintechnik, Lebensmitteltechnik, Elektronik, Elektrotechnik, Behälter- und Apparatebau, Fahrzeugbau oder als Verpackungsmaterialien.

12. Verwendung nach Anspruch 11, **dadurch gekennzeichnet, dass** es sich bei dem Formkörper um einen Behälter, eine Dichtung, ein Inhalatorteil, eine Beißschiene, ein Injektorteil, eine Faser oder eine Folie handelt.

13. Verwendung nach Anspruch 12, **dadurch gekennzeichnet, dass** es sich bei dem Behälter um eine Flasche, Kartusche oder Ampulle handelt.

14. Verwendung nach Anspruch 12, **dadurch gekennzeichnet, dass** es sich bei dem Injektorteil um eine Spritze oder eine Ampulle handelt.

15. Verwendung nach Anspruch 12, **dadurch gekennzeichnet, dass** es sich bei der Folie um eine Tiefziehfolie oder eine verstreckte Folie handelt.
